# EUROPEAN PATENT SPECIFICATION

(11) **EP 0 496 957 B1**
(45) Date of publication and mention of the grant of the patent: **21.09.1994**
(21) Application number: 91119135.1
(22) Date of filing: 11.11.1991
(51) Int. Cl.: A47L 15/42, D06F 39/00, B01J 49/00

(54) **Method for the regeneration of a water softener in a washing machine**
Methode zur Regeneration eines Wasserenthärters in einer Waschmaschine
Procédé pour la régénération d'un adoucisseur d'eau dans une machine à laver

(30) Priority: 29.01.1991 IT PN910003
(43) Date of publication of application: 05.08.1992
(73) Proprietor: Zanussi Elettrodomestici S.p.A., I-33170 Pordenone (IT)
(72) Inventor: Milocco, Claudio, I-33170 Pordenone (IT); Sist, Rosa, I-33170 Pordenone (IT)
(74) Representative: Busca, Luciano

(56) References cited:
- EP-A- 0 219 704
- DE-A- 1 517 488
- DE-A- 2 630 164
- US-A- 3 414 130

## Description

This invention relates to an improved method for the regeneration of water softening means in a washing machine, particularly an automatic dishwashing machine.

As it is common knowledge, the water supply circuit of such machines as automatic dishwashing machines is usually provided with water softening means containing active resins that are regenerated periodically through the addition of metered quantities of brine flowing thereto through a salt reservoir. In order to adapt the extent of regeneration of the water softening device to the actual hardness degree of the supply water, it is possible to adjust the quantity of brine to be metered into said water softening device.

In an alternative method, it is possible to regenerate the water softening device through the addition of a constant quantity of brine, the salt concentration of which being in this case varied accordingly.
Such an embodiment is for instance disclosed by EP-B-0 219 704, in which mechanical means are provided to vary said salt concentration by changing the length of the average flow path of a pre-determined volume of regeneration water through the mass of salt that is situated inside the specially provided reservoir. In this way, in the case of a very high hardness degree of the supply water, it is practically possible to do away with the need of using considerable volumes of brine which might then overflow into the wash tank of the machine and give therefore rise to corrosion problems. On the other hand, the adjusting means for the salt concentration, which are housed within the salt reservoir, may turn out to be quite difficult to reach and their adjustment may turn out to be indesirably inaccurate.

It is the main purpose of this invention to therefore provide a method for the regeneration of a water softening device in a washing machine, which will enable the extent of regeneration of said water softening device to be easily, conveniently and accurately adjusted according to the hardness degree of the supply water, as well as any corrosion problem in the washing tank of the machine to be substantially excluded.

It is a further purpose of the present invention to provide a water softener regeneration method of the afore cited type, which is adpated to be embodied in a washing machine being provided with a water supply circuit that is substantially simple and reliable in its design.

According to the invention, such aims are reached in a method for the regeneration of a water softening device in a washing machine incorporating the features as recited in the herein appended claims.

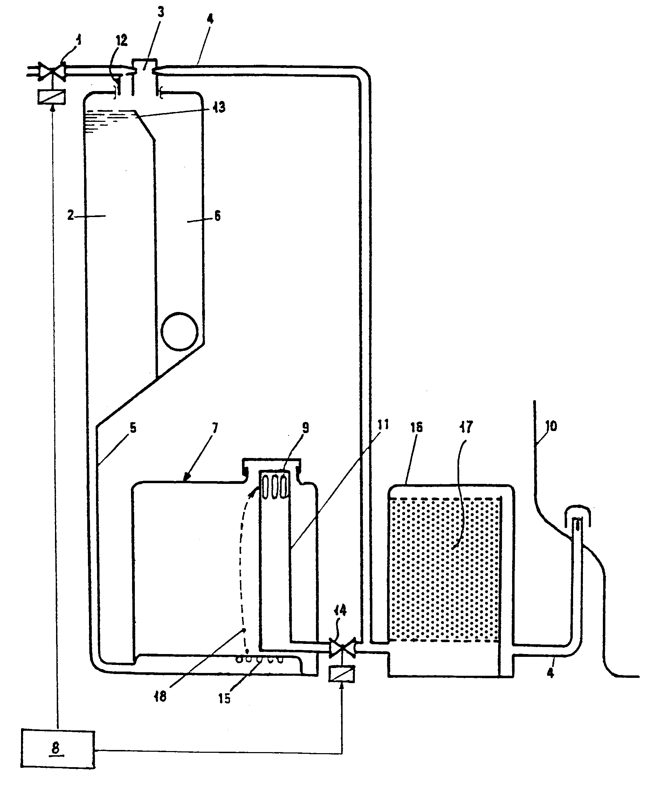

The features and the advantages of this invention will be further delineated in the following description, by way of non-limiting example, with reference to the accompanying drawing, in which the shown Figure is the schematic view of a preferred embodiment of the water supply circuit of a washing machine which is capable of performing the method according to the invention.

Referring now to said Figure, the numeral 10 is used to indicate the wash tank (shown only partially) of an automatic washing machine, such as a domestic dishwashing machine. Said wash tank 10 is adapted to be supplied with fresh water by means of a water supply pipe 4 in which there are arranged in series a controlled inlet valve 1, an air gap 3 and a water softener 16. In a *per sè* known way, said water softener 16 houses thereinside a granular mass 17 of ion-exchange resins, or similar active resins, which are capable of reducing the hardness of the supply water and which require periodical regeneration. Said mass of granulate resins 17 is such as to only partially fill said water softener 16, the overall internal volume of which therefore includes also a free volume, to which reference will be made hereinafter and which is not occupied by said mass 17.

In a similarly *per sè* known way, water leakages occurring in correspondence of said air gap 3 are collected in an underlying tray 6, the bottom of which is to be understood as being connected with said wash tank 10. Preferably upstream with respect to said air gap 3, said water supply pipe 4 is provided with a calibrated cross-section bifurcation 12 adapted to deliver water to a storage reservoir 2 communicating with the collection reservoir 6, and therefore with the outside environment, through an overflow partition wall 13. A tubing 5 connects the bottom portion of the storage reservoir 2 with the inlet of an underlying salt reservoir 7. In a preferred way, such an inlet comprises a perforated diffuser 15 located on the bottom of the reservoir 7. The latter is further provided with an outlet which preferably comprises a hollow body 11 extending upwards within said salt reservoir 7, said hollow body 11 being provided with at least an upper opening 9 and its bottom portion being connected with the water supply pipe 4, upstream with respect to the water softener 16, through a controlled valve means 14.

Said valve means 1 and 14 are controlled by the programme control device of the machine, which is schematically referred to with the numeral 8 in the Figure. Said programme control device 8 is of a *per sè* known type, such as for instance of an electromechanical type. In a preferred way, however, said programme control device is of an electric type, including for instance a Motorola 6804 or 6805 microprocessor.

In any case, said programme control device is set and arranged to control one or more operational cycles of the machine, as they may be selected by the user, to go automatically through all their sequences. In a substantially traditional way, said operational cycles are performed in the form of washing programmes which may include a sequence of different operational phases, such as for instance a water fill phase, different washing and rinsing phases, a water outlet phase, a water softener regeneration phase, etc. Preferably, but not exclusively, each one of said water softener regeneration phases is carried out at the end of a corresponding water fill phase.

As it should be clearly apparent to anyone skilled in the art, said programme control device 8, and in particular the microprocessor associated therewith, is able to be adjusted in a *per sè* known manner in view of suitably setting the various process parameters (such as for instance the moments in which the various functional parts of the machine are to be actuated or energized, the duration of actuation or energization thereof, etc.) determining the timing of the process phases making up the various selectable operation cycles of the machine.

For instance, in order to perform a water fill phase the programme control device 8 causes the valve 1, which is of the same normally closed type as the valve 14, to open for a pre-set period of time. A corresponding quantity of water from the mains is then let into the wash tank 10 through the water supply pipe 4, after having been appropriately softened in the water softening device 16. During this phase, the storage reservoir 2 is filled with water flowing in from said bifurcation 12 of the water supply pipe 4.

The various washing, rinsing and similar phases are substantially of a traditional type. As such, they are not covered by the invention and will therefore not be described any further for simplicity purposes.

According to an aspect of the invention, each one of the regeneration phases of the water softening device 16 is carried out in at least two distinct, subsequent periods of time. In a first period, the programme control device 8 causes the valve 14 to open, while the other valve 1 stays in its closed condition. As a consequence, a corresponding volume of water stored in the reservoir 2 flows by gravity along the tubing 5, passes through the mass of salt housed in the reservoir 7 and enters the water softener 16 through the valve 14.

Inside the salt reservoir 7, in particular, the water flows from the diffuser 15 towards the opening 9 of the outlet hollow body 11 and, in doing this, it follows a predetermined average path which is schematically referred to with the numeral 18 in the Figure. The water converts therefore into brine with a predetermined salt concentration, preferably close to saturation.

By setting the programme control device 8, for instance when installing the machine, in such a way as to adjust the duration of the afore described first period of opening of said valve 14, the volume of the brine flowing into the water softener 16 can be varied correspondingly between a minimum value and a maximum one, according to the degree of hardness of the supply water.

In accordance with a further aspect of the invention, such a maximum volume is smaller than the afore cited free, unoccupied volume of the water softener 16, while said minimum volume can be decided upon and set by the manufacturer according to the actual needs.

After this first period of the regeneration phase, the programme control device 8 then causes the valve 1 to open for a second period of time during which the valve 14 is caused to return to its closed condition. This brings about the inflow in the water softener 16, through the water supply pipe 4, of a complementary volume of water from the mains, which is instrumental in displacing the volume of brine previously let into said water softener 16 and bringing it into contact with the entire mass of the resins 17.

During the regeneration phase, said granulate resin mass 17 is stirred and mixed up by said water and brine mixture, so that the regeneration process itself (which in a known way can be completed with a subsequent period of permanence of said mixture in the water softener) is actually brought about and completed in a thorough and effective way.

Quite obviously, during said second period of the regeneration phase the brine let into the water softener 16 during the first period is subject to a dilution effect brought about by the addition of said complementary volume of water from the mains. As a consequence, care shall be taken in appropriately considering said dilution in view of accordingly adapting the duration of said first and second periods to the degree of hardness of the mains water. This, however, is a mere problem of general dimensioning of the machine, which is therefore within capacity of anyone skilled in the art who gets a knowledge of this invention, and which can be easily and accurately solved particularly in the case in which the programme control device 8 is of an electronic type, as previously mentioned.

According to a further aspect of the invention, the programme control device 8 can be set in such a way as to adjust the duration of the second interval or period of the regeneration phase in view of letting into the water softener 16 a complementary volume of water from the mains which is substantially equal to and in any case not greater than the difference between the afore mentioned free volume of the water softener 16 and the volume of brine let into the same water softener during said first period of the regeneration phase.

Such an adjustment, which can for instance be carried out when the machine is being installed, enables the whole mass of resins 17 to be regenerated, while at the same time preventing the brine from flowing over into the wash tank 10, where it might give rise to the afore mentioned corrosion problems.

It should be noticed that, to this purpose, "free volume" can be understood as not being solely represented by the inner volume of the water softener 16 which is not actually occupied by the mass of resins 17, but also by the inner volume of the water supply circuit 4 situated downstream with respect to the same water softener.

Based on the above description and considerations, it quite apparently appears that the method of regeneration according to the invention can be practically, easily and accurately implemented in a washing machine of a substantially *per sè* known type, without any need arising for special adjustment means.

It will be appreciated that the above described method may be the subject of any modifications considered to be appropriate, without departing from the scopes of the invention. For instance, the opening time of both valve means 1 and 14 during the regeneration phases, and therefore also the volumes of brine and water that are let into the water softener 16, can be varied as a function of the general dimensioning of the machine.

Furthermore, the method according to the invention can similarly be implemented in a washing machine equipped with a different water supply circuit. For instance, the tubing 5 can connect the salt reservoir 7 with the water supply mains, rather than with the storage reservoir 2, preferably through the valve 1. In such a case, of course, the valve 1 will be caused to open even during said second period of the regeneration phase. In an alternative approach, said controlled valve 1 may be a two-way valve controlled by the programme control device 8 in such a way as to selectively connect with the water supply mains the tubing 5 and the pipe 4 during said first and said second period, respectively, of the regeneration phase.

## Claims

1. Method for the regeneration of a mass (17) of active resins contained in a water softener (16) connected in the water supply circuit (4) of a washing machine, said water softener having an overall inner volume which is equal to the volume of said mass of resins plus a free volume, and being further adapted to be selectively supplied with fresh water and brine through valve means (1, 14) controlled by the programme control device (8) of the machine, **characterized in that** said water softener (16) is supplied with a metered volume of brine during at least a first period of time and is subsequently supplied with a complementary volume of fresh water during at least a second period of time, the sum of said metered volume of brine and said complementary volume of water being substantially equal to said free volume.

2. Method according to claim 1, **characterized in that** said metered volume of brine is proportional to the hardness of said supply water from the mains.

3. Method according to claim 1, **characterized in that** the sum of said metered volume of brine and said complementary volume of water is equal to or smaller than said free volume.

4. Method according to claim 1, **characterized in that** said metered volume of brine and said complementary volume of water are determined by said programme control device (8) through the opening of said normally closed valve means (1, 14) during said first and said second period of time, respectively.

## Patentansprüche

1. Verfahren zur Regenerierung einer Masse (17) aktiver Harze, die sich in einem Wasserenthärter (16) befinden, der in der Wasserzufuhrleitung (4) eines Waschautomaten zwischengeschaltet ist, wobei der genannte Wasserenthärter einen Gesamtinnenraum aufweist, der so groß ist wie das Volumen der genannten Masse aus Harzen plus einem freien Raum, und ferner so angeordnet ist, daß ihm über Ventile (1, 14), die von der Programmsteuerung (8) des Waschautomaten gesteuert werden, wahlweise Leitungswasser und Salzlösung zugeführt werden kann, **dadurch gekennzeichnet, daß** dem genannten Wasserenthärter (16) in mindestens einem ersten Zeitintervall eine dosierte Menge Salzlösung und anschließend in mindestens einem zweiten Zeitintervall eine zusätzliche Menge Süßwasser zugeführt wird, wobei die Summe der genannten dosierten Menge Salzlösung und der genannten zusätzlichen Menge Wasser im wesentlichen so groß ist wie der genannte freie Raum.

2. Verfahren nach Anspruch 1, **dadurch gekennzeichnet, daß** die genannte dosierte Menge Salzlösung proportional zur Härte des genannten Leitungswassers ist.

3. Verfahren nach Anspruch 1, **dadurch gekennzeichnet, daß** die Summe der genannten dosierten Menge Salzlösung und der genannten zusätzlichen Menge Wasser so groß wie der genannte freie Raum oder kleiner als dieser ist.

4. Verfahren nach Anspruch 1, **dadurch gekennzeichnet, daß** die genannte dosierte Menge Salzlösung und die genannte zusätzliche Menge Wasser von der genannten Programmsteuerung (8) durch das Öffnen der genannten, normalerweise geschlossenen Ventile (1, 14) in dem genannten ersten bzw. zweiten Zeitintervall bestimmt werden.

## Revendications

1. Procédé de régénération d'une masse (17) de résines actives contenue dans un adoucisseur d'eau (16) raccordé au circuit d'alimentation en eau (4) d'une machine à laver, ledit adoucisseur d'eau ayant un volume intérieur global qui est égal au volume de ladite masse de résines plus un volume libre, et étant adapté de plus pour être alimenté , de façon sélective, en eau fraiche et en saumure par des moyens de vannes (1, 14) commandés par le dispositif de commande de programme (8) de la machine, caractérisé en ce que ledit adoucisseur d'eau (16) est prévu avec un volume dosé de saumure pendant au moins une première période et est ensuite prévu avec un volume complémentaire d'eau fraiche pendant au moins une seconde période , la somme dudit volume dosé de saumure et dudit volume complémentaire d'eau étant sensiblement égale audit volume libre.

2. Procédé selon la revendication 1, caractérisé en ce que ledit volume dosé de saumure est proportionnel à la dureté de ladite eau d'alimentation venant de l'alimentation principale.

3. Procédé selon la revendication 1, caractérisé en ce que la somme dudit volume dosé de saumure et dudit volume complémentaire d'eau est égale ou inférieure audit volume libre.

4. Procédé selon la revendication 1, caractérisé en ce que ledit volume dosé de saumure et ledit volume complémentaire d'eau sont déterminés par ledit dispositif de commande de programme (8) par l'ouverture desdits moyens de vannes normalement fermés pendant la première et la seconde période , respectivement.
